(19) Europäisches Patentamt
European Patent Office
Office européen des brevets

(11) **EP 2 624 533 A1**

(12) **EUROPEAN PATENT APPLICATION**

(43) Date of publication:
**07.08.2013 Bulletin 2013/32**

(51) Int Cl.:
*H04M 1/725* (2006.01)

(21) Application number: **12275218.1**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.12.2011 GB 201122206**
**23.03.2012 GB 201205162**

(71) Applicant: **Vodafone IP Licensing Limited**
**The Connection**
**Newbury**
**Berkshire RG14 2FN (GB)**

(72) Inventors:
• **Lovett, Thomas**
**Newbury, Berkshire RG14 2FN (GB)**
• **Pollington, David**
**Newbury, Berkshire RG14 2FN (GB)**
• **O'Neill, Eamonn**
**Newbury, Berkshire RG14 2FN (GB)**

(74) Representative: **Ellis, Lyle John**
**Vodafone Group Services Ltd**
**Group Legal (Patents)**
**Babbage House**
**The Connection**
**Newbury, Berkshire RG14 2FN (GB)**

(54) **Mobile device and method of determining a state transition of a mobile device**

(57)    There is provided a mobile device comprising: one or more sensors; a plurality of additional sensors; and logic configured to: obtain one or more first data outputs from the one or more sensors when the mobile device is in a first state; obtain one or more second data outputs from the one or more sensors; determine whether there has been a transition from the first state to a second state, based on a difference between the one or more first data outputs and the one or more second data outputs; obtain one or more third data outputs from the plurality of additional sensors if there has been a transition from the first state to the second state; and compare the one or more third data outputs with stored data outputs obtained using the plurality of additional sensors in a third state of the mobile device, the third state being a state prior to the first state, thereby determining whether the mobile device is in the third state.

Figure 2

EP 2 624 533 A1

**Description**

**Field of the Invention**

The present invention relates to a mobile device, and in particular to a mobile device operable to determine if it has transitioned from an unknown state to a known state. The invention also relates a method of determining a state transition of a mobile device, from an unknown state to a known state.

**Background to the Invention**

Mobile devices, such as mobile phones, are more and more pervasive in many aspects of a user's daily lifestyle. However, in many respects a mobile device is still a dumb companion, with little or no awareness of its user's context, e.g. where they are, what they're doing, etc.

Mobile devices typically include one or more built-in sensors. The sensors are configured to take readings of the user's environment, such as the ambient air temperature, the device's geographic location, or the intensity of the ambient lighting. Whilst such readings may be used to infer a user's context, the sensors must generally be repeatedly polled or activated in order for the device to maintain a contextual awareness of the user. Therefore, a current solution to the above problem is to continuously monitor the context of the user using the sensors now integrated into modern smartphones, for example (accelerometer, digital compass, ambient light sensor, GPS positioning sensor, etc.), and/or explicitly requiring the user to enter their state via the handset (e.g. 'checking in' to a social media service such as Foursquare).

Repeatedly activating and taking readings from a mobile device's sensors, however, creates a noticeable drain on the device's power supply, such as its battery. This power drain is especially noticeable when the sensors are continuously active, when maintaining a constant contextual awareness. It is also burdensome and inconvenient for a user to continuously activate specific sensors of a device in order to take readings. Furthermore, users may not want their location information (for example) to be sent back to a mobile network before a user's context may be determined. Instead, users may be more content for the mobile device to determine their context internally without the need to transmit data to a third party.

There is therefore a need in the art to provide an improved mobile device that may provide services with contextual awareness, and thereby address the disadvantages encountered in the prior art.

**Summary of the Invention**

The present invention is directed to an improved mobile device that may provide a user with contextual awareness.

In a first aspect of the present invention, there is provided a mobile device comprising one or more sensors and logic. The logic is configured to obtain one or more first data outputs from the one or more sensors when the mobile device is in a first state; obtain one or more second data outputs from the one or more sensors; and determine whether there has been a transition from the first state to a second state, based on a difference between the one or more first data outputs and the one or more second data outputs.

The mobile device may be any portable device, such as a mobile telephone, a laptop computer, a personal digital assistance, etc. In some embodiments, the mobile device need not be easily portable, and, for example, could be a desktop computer.

According to the present invention, the mobile device may more easily determine when it transitions from a first state to a second state, by differencing a data output read when the mobile device is in a first state from a data output read at a later time. Based on the difference, the mobile device may more easily determine if there has been a state transition. The one or more first data outputs may be read when the mobile device is at a known (or previously detected/encountered) state, or during a known state. Likewise, the one or more second data outputs may be read when the mobile device is at an unknown state (or one not previously detected/encountered), or during an unknown state.

A first state of a mobile device may include a stable state (e.g. characterised by relatively time-constant sensor readings) or perhaps may include a state that has been provided with an identifier, attribute or characterisation for later comparison to other sensor data. The first state may not necessarily have to be a state which is known or has previously been encountered. Similarly, a second state may not necessarily have to be a state which is unknown or that has previously not been encountered

A 'state' of the mobile device may be a state characterised by the data outputs read from a plurality of sensors of the mobile device. For example, a first state (e.g. a known state) may be characterised as an 'at work' state when an accelerometer of the mobile device gives a nil reading and a GPS receiver of the mobile device gives a positional reading indicative of the user's place of work. On the other hand, a second state (e.g. an unknown state) may be defined by a GPS reading indicative of the user's place of work, but with a positive accelerometer reading. Thus, by subtracting one accelerometer reading (e.g. the positive reading) from the other (e.g. the nil reading), the mobile device may determine that it has undergone a state transition from a first state to a second state (e.g. from a known state to an unknown state). A state transition may therefore be seen as a change in data output readings at different points or periods in time.

Advantageously, the determination of a state transition may be confined to the device. For example, in the case of a mobile phone, determination of state transition need not be communicated to the device's mobile network and the processing may be carried out within the device. This may improve user privacy.

The mobile device may further comprise one or more additional sensors. The logic may be further configured to obtain one or more third data outputs from a plurality of the additional sensors if there has been a transition from the first state to the second state. The one or more sensors and/or the one or more additional sensors may be configured to measure characteristics of the second state.

If the mobile device determines that it has transitioned from a first state to a second state, it may then 'characterise' the second state by activating multiple sensors and taking a plurality of readings in the second state. This may allow the mobile device to characterise, or otherwise apply a signature or fingerprint to, the second state. Thus, the second (unknown) state may then become in effect a known state, defined by the data outputs of multiple sensors. The logic in the device may furthermore be configured compare the one or more third data outputs with stored data outputs obtained using a plurality of additional sensors in a third state of the mobile device, the third state being a state prior to the first state, thereby determining whether the mobile device is in the third state. Thus, the device may be configured to first detect a state transition, then take multiple measurements/readings of the new state using a plurality of additional sensors, and then compare these readings to stored readings taken by the same additional sensors in a prior state. Thus, the device may determine if it has transitioned to a previously encountered state. Depending on the state it has transitioned to, the device may configure itself accordingly (e.g. enter a 'sleep' mode).

The characteristics of the second state may include the data outputs read from the sensors when the mobile device is in the second state (or unknown state). The one or more additional sensors (or 'characterising' sensors), used to turn an unknown state into a 'known' state, may characterise the unknown state by virtue of their data outputs. The one or more sensors (or 'heartbeat' sensors), used to determine a state transition, may also characterise the unknown state with their data outputs. Furthermore, the unknown state may be characterised based on a time period over which the one or more first data outputs and/or the one or more second data outputs are read.

Once a second, unknown (or not yet encountered) state has been characterised, the one or more additional sensors may be switched off or deactivated, in order to conserve the device's resources.

A state of the mobile device may be defined as known or unknown based on the data outputs read from a plurality of sensors of the mobile device. For example, a state may be defined as a known state only once a predefined number of sensors are used to take readings when in the state. Thus, for instance, a state may remain an unknown state until the mobile device has acquired a reading from each of: its accelerometer, its GPS receiver, its thermometer, and its microphone.

The plurality of additional sensors may be selected according to the one or more first data outputs. As will be described below in more detail, in one embodiment, a state may be characterised as a dynamic state (e.g. if a positive accelerometer reading is given) or a static state (e.g. if a nil or relatively low accelerometer reading is given). It may therefore be advantageous to select the sensors used to characterise an unknown state and define it as a known state based on the sensor readings in the known state. As an example, if, in a known state, the one or more first data outputs characterise the known state of the device as being an 'at home' known state, then the device, upon detecting a state transition to from a first (known) state to a second (unknown) state, may select a GPS receiver of the device as one of the additional sensors used to characterise the unknown state (e.g. to determine where the user is heading to).

The device may furthermore be configured to carry out certain actions or perform certain methods in response to detecting a state transition. For example, assume a dynamic state of the device is determined to have transitioned to an unknown state. By activating multiple sensors, the device may then determine that the unknown is a static state and that the device is in an 'at work' state. In such a scenario, the device may be configured to synchronise the device with the user's e-mail server. Thus, a user's e-mail may be synchronised only when the device is in the 'at work' state, and not periodically, as typically found in the prior art. This reduces the energy drain on the device.

In another scenario, the device may be configured to lock itself should no state transition be detected over a predetermined time period. For example, if a device is left on a user's desk, the data outputs from the sensors are unlikely to register much change over time. The device may therefore be configured to lock after five minutes of relatively constant data output readings.

The plurality of additional sensors may be selected according to the difference between the one or more first data outputs and the one or more second data outputs. If there is a large difference between the first data outputs and the second data outputs, then the device may choose to activate a large number of additional sensors upon detecting a state transition, or else may choose to activate only a specific sensor.

The plurality of additional sensors may outnumber the one or more sensors. This may be preferable when only a single sensor is polled (e.g. a 'heartbeat' sensor) in the mobile device's first state. A heartbeat sensor may be a sensor that expends a relatively small amount of energy in order to be run. Once the heartbeat sensor produces a data output that allows the device to detect a state transition, multiple sensors may then be activated to provide a full and complete 'fingerprint' of the second (and as yet unknown) state. This increases the number of sensors that may then act as a heartbeat sensor for subsequent data output readings, since the previously unknown state (now characterised as a known state) will comprise multiple different data outputs that define it, each output being from a respective sensor. Thus, the subsequent heartbeat sensor may then be chosen from any one of these sensors.

The logic may be further configured to periodically obtain one or more data outputs from the one or more sensors until the logic determines there has been a transition from the first state to a second state. This may ensure that state transitions are regularly identified, and may preferably allow the states into which transitions occur to be rapidly identified and catalogued, for example.

The logic may be further configured to measure characteristics of the second state using stored data outputs obtained from a plurality of sensors of the mobile device in a state prior to the first state. Thus, if sensor readings are very similar to a set of sensor readings that have been stored on the device, the device may allocate the state characterisation used for the stored readings to the new readings. In some embodiments, stored data outputs may originate from other devices. For example, the mobile device, having taken a set of sensor measurements, may then consult a database of stored sensor readings in order to match the sensor measurements it has just taken with a set of stored measurements. This may allow the mobile device to more rapidly and efficiently characterise the unknown state.

The logic may be further configured to determine there has not been a transition from the first state to a second state if the difference between the one or more first data outputs and the one or more second data outputs does not exceed a predetermined threshold. Thus, the mobile device may determine that there has not been any state transition if the difference in data outputs is negligible, or below a predetermined threshold. As an example, a mobile device in a state characterised as a 'user sleeping' characterised or known state may determine that a state transition has occurred when the ambient light sensor measures an ambient light level that exceeds a predetermined threshold (this could be used to then trigger an alarm clock, to wake the user, for example).

The logic is further configured to determine whether there has been a transition from the first state to a second state based on a comparison of the one or more first data outputs with the one or more second data outputs. A comparison may be useful when comparing the data output readings from two different sensors, whose respective readings cannot be directly subtracted, one from the other.

The mobile device may be operable to receive data input so as to confirm whether there has been a transition from the first state to the second state. Data input may be in form of a user manually inputting data into the device (e.g. via a keypad or a touch screen), or could be communicated (wirelessly or otherwise) to the device from another, remote device. For example, data readings characterising an unknown state may be uploaded to a server that then compares the readings with stored readings, the stored readings having been obtained when the device was in previous unknown states. The uploaded readings may then be compared with the stored readings to determine the most relevant characterisation of the state the device currently is in. This characterisation (e.g. a label) may then be transmitted to the mobile device, and associated with the (unknown) state the device is currently in, thus effectively making it a known state. Furthermore, a set of data outputs may be built up, each attributed to a given state of a mobile device. A user may then individually define each state according to predefined or user-defined states or categories of state, for example. This could be carried out using a calendar-type feature in the user's device.

A sensor of the mobile device may be selected from one of the following: an accelerometer, a digital compass, a GPS receiver, a microphone, an ambient light sensor, a thermometer, a radio receiver, a Bluetooth receiver, and a Wi-Fi receiver. Other types of sensors may be used. A radio or network receiver may detect cell switching of the mobile device, especially when considering a device such as a mobile telephone. Thus, rather than using a device's GPS sensor to monitor the mobile telephone's position according to mobile cells (this being relatively power-intensive), the device's radio receiver may do so instead, and, using this information, may characterise an unknown or uncharacterised state of the device.

Thus, a mobile device according to the present invention may employ multiple sensors selectively in order to identify or detect state transitions. Preferably, the device may adopt a state-based model to sample and label user context. The ability to perform this process solely on the mobile device (without additional server-side components) is also advantageous.

In a second aspect of the present invention, there is provided a method of determining a state transition of a mobile device having one or more sensors. The method comprises obtaining one or more first data outputs from the one or more sensors when the mobile device is in a first state; obtaining one or more second data outputs from the one or more sensors; and determining whether there has been a state transition from the first state to a second state, based on a difference between the one or more first data outputs and the one or more second data outputs.

The mobile device may further comprise one or more additional sensors, and the method may further comprise obtaining one or more third data outputs from a plurality of the additional sensors if there has been a state transition from the first state to a second state. The one or more sensors and/or the one or more additional sensors may be configured to measure characteristics of the second state. The method may further carry out any of the steps described above and specifically in relation to the mobile device.

In a third aspect of the present invention, there is provided a computer-readable medium for storage on a mobile device. The computer-readable medium comprises executable code configured such that, when executed on a computer, the code will perform any of the above-described methods. The code may be stored on any suitable medium, such as a flash drive, a CD-ROM, a hard disk, etc., or may be sent as a signal.

It should be noted that any feature described above may be used with any particular aspect or embodiment of the invention.

## Brief Description of the Drawings

Several embodiments of the present invention will now be described by way of example and with reference to the following drawings, in which:

Figure 1 shows a schematic diagram of a mobile device in accordance with an embodiment of the present invention;
Figure 2 is a flow diagram illustrating the steps taken by a mobile device for determining a context state transition and identifying a context state, in accordance with an embodiment of the present invention;
Figure 3 is a schematic diagram illustrating an example of user context labelling, in accordance with an embodiment of the present invention; and
Figure 4 is a schematic diagram illustrating an example of user context correction, in accordance with an embodiment of the present invention.

## Detailed Description of Embodiments of the Invention

Whilst various embodiments of the present invention are described below, the invention is not limited to these embodiments and variations of these embodiments may well fall within the scope of the invention which is to be limited only by the appended claims.

Further embodiments and specific examples may be found in the appended Annex, *"Event-based Context Sampling and Online Inference with Mobile Devices",* which is incorporated into this description.

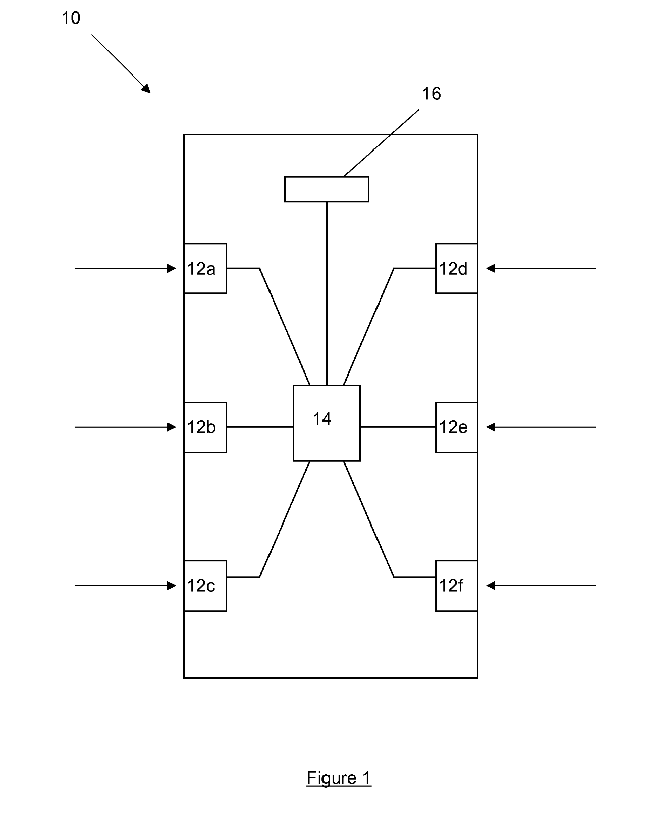

Figure 1 illustrates a mobile device in accordance with an embodiment of the present invention. Mobile device 10 comprises six sensors, 12a - 12f, logic 14 stored in a suitable medium of the mobile device, such as a memory of the mobile device, and processor 16. Mobile device 10 is typically any portable device, such as a mobile telephone, a laptop computer, a personal digital assistance, etc. In other embodiments, the mobile device need not be easily portable, and, for example, could be a desktop computer.

Sensors 12a - 12f are configured to accept input from the outside environment. For example, sensor 12a may be an ambient light sensor and may comprise a photosensitive detector adapted to measure a light level outside of mobile device 10. Sensor 12b may be an accelerometer and may be configured to measure an acceleration of mobile device 10 along a plurality of axes. Sensor 12c may be a GPS receiver and may be configured to measure a geographic position of mobile device 10, by receiving relevant data from GPS satellites. Sensors 12c - 12f could comprise a network sensor, such as a radio transceiver adapted to receive communications from, and transmit them to, a mobile network of device 10.

Logic 14 is operatively connected to each of sensors 12a - 12f and is configured to read a corresponding data output from each of sensors 12a - 12f. Processor 16 is connected to logic 14 and is configured to read logic 14 so as to manipulate and process the data outputs read from sensors 12a - 12f. Mobile device 10 may further comprise a memory (not shown) which may be configured to store data outputs read from sensors 12a - 12f. Processor 16 may then be further configured to access data outputs stored in the memory, and manipulate these stored values, and may combine them with fresh data outputs read from one or more of sensors 12a - 12f.

Mobile device 10 is used to determine whether there has been a transition from a first state (such as a known state) to a second state (which could be an unknown state). In what follows, various advantages and particular implementations of the present invention are described.

As outlined in the background to the invention, rather than continuously monitoring the activity of a handset / its user to determine context, a better approach is to treat the activity of the user as a set of discrete states - for instance, sitting at a desk, making a cup of coffee in the kitchen, having lunch in the work canteen, etc. A mobile device according to the present invention allows one to identify when there is a change in state (a state transition) and thereafter may determine the identity of the new state that has been entered. Doing so enables a reduction in the number of sensors that need to be continually active (or periodically active) and, most importantly, avoids the use of 'expensive' sensors (such as a GPS receiver) that would otherwise have to be repeatedly polled and drain the battery life of the handset.

Once a transition in state has been detected, the mobile device can then turn on the additional sensors it needs and, through a process of 'sensor fusion', derive the new state that the individual (and their handset) has entered. By building up heuristic knowledge of the states that the user commonly enters, the mobile device can create a profile of the user and their most common (or habitual) states, and thereby use this for improving state recognition and/or predicting future states based on states that have already been traversed within a given time period.

For example, rather than simply using an accelerometer to determine movement, the mobile device may use algorithms across multiple sensor-based data sets to characterise the context of the individual. For instance, whilst in a meeting, an individual may leave their handset on the table, in a pocket, or be 'fiddling' with it - each of these scenarios will be creating very different sensor profiles, but all pertain to the same static state of 'in a meeting'.

## 1. Context state definition

The mobile device captures data from one or more sensors (accelerometer, digital compass, GPS receiver, Wi-Fi receiver, Cell ID, microphone, ambient light sensor, etc.) and uses 'sensor fusion' techniques and algorithms that are processed on the handset to create a unique fingerprint for the current context of an individual/handset (note that this fingerprint is not a static snapshot, but rather a characterisation created by sensor outputs within a specific temporal pattern and amplitude, and, when combined with the outputs of additional sensors, uniquely identify a state associated with an individual/handset). 'Sensor fusion' is the term used to describe multiple sensors generating respective data outputs, these outputs then being read by logic of the mobile device so as to determine whether a state transition has occurred.

States are defined as the characterisation of a context of an individual in such a way as to have semantic meaning, either to the individual or across a group of individuals. A 'common' state most likely refers to a context that is linked to a place that is frequently visited (such as 'home' or 'work' on a macro level, or else 'desk' or 'canteen' on a micro level). An 'ad hoc' state represents a transient context which is common across a group of individuals at a time and place (such as being stuck in a traffic jam on a motorway). When an 'adhoc' state is repeated consistently (e.g., a traffic jam at a known traffic black spot), then such a state may then become a 'common' state with a specific semantic tag (e.g. traffic jam on Heathrow Airport spur road). The respective outputs from multiple sensors of the mobile device may be used to characterise and assign an 'output signature' to each of these states, or contexts.

## 2. Context state transition triggering

In one embodiment, the mobile device identifies when a sensor output exceeds given thresholds, hence signalling a change in user state, possibly from a known state to an unknown state. The mobile device may be effectively moving from a static state to a dynamic one, and vice versa - e.g. getting up from your desk at work and walking to somewhere else. Upon transiting from one state to another (e.g. from a static state to a dynamic state), the mobile device may activate and analyse the outputs from additional sensors (sensor fusion) in order to identify the new state is (e.g. as described under "Context state definition"). The sensors that are employed will depend on the type of state the user is transitioning into, e.g. location-based sensors for a static state, and activity-based sensors for a dynamic state.

## 3. Context state semantic labelling & correction

In order for the state information to be useful across a variety of different applications, it may be necessary to attach a semantic meaning to the state (at the very least, to those states that are common/habitual for the individual in question, or, alternatively, to all states, in which case generic tags may be used to describe ad hoc states that are common across multiple individuals, such as being in a traffic jam). There are multiple mechanisms that could be employed to attribute semantic meaning to each static state:

- States are populated into an 'inference' calendar and presented to the user for manual tagging and/or correction of inferred tags - to minimise the load on the user, this could be constrained to only common states.
- If the user uses a social media check-in service, then this semantic tag may also be used to tag that particular state recognised by the system (by leveraging public social media APIs to obtain details of the activity that the individual in question posted on the social media site).
- Similarly, if the individual uses #tags to represent their current context, this information could also be harvested by open Twitter APIs for semantic tagging.
- If the individual redeems a voucher (via their mobile handset) at a Point of Sale, then the information relating to which store the individual is in could also be used for semantically tagging the state (context) of the individual.
- If the user enters a state that is recognised as similar to an historic state recorded for another individual, then there may be the option of applying that state's tag to the user's state (effectively, a form of implicit crowd-sourcing of tags). Grouping state patterns across multiple users generates a library of semantically tagged patterns against which the pattern/state of a new user can be compared, thereby determining the place of the user without the need for explicit training for that user.

Advantages of the present invention include:

- The invention may make use of event-based sampling, i.e. sampling based upon state transition, rather than periodic (or continuous, or random) polling of sensors, hence minimising battery impact by selectively using handset sensors to determine user context.
- The invention may provide rich, real-time contextual information for a given user that can be used within a wide range of services.
- The invention may be carried out on a mobile device without the need for user interaction (although user interaction is likely to improve performance, such as in the case of embodiments directed to labelling and correction).
- By recognising and historically creating a record of user states, the invention may provide context/state information to a 3rd party system without explicit user interaction (as would be the case with current social media systems that require the user to check-in manually each time a location is visited). In effect, a user would only have to 'check-in' (i.e. semantically tag) a location (state) once, and thereafter the system could automatically 'check-in' the user whenever that place was visited.
- Furthermore, the invention may (but not necessarily does) operate entirely on the handset without sending user data to 3rd parties, hence protecting the privacy of the user (i.e. contextual information may be derived on the handset and provided solely to applications on the handset to which the user has granted authorisation to use that information) - in doing so, the user is given a greater degree of privacy and control over the use of the data.

The present invention may be used in various different applications, examples of which are described below.

**Transport (traffic congestion)**

By defining journey paths as a succession of states (waypoints), common states (waypoints) across a multitude of users may indicate traffic blackspots (either historically or at a particular time). Note that, in this example, it may be assumed that a state will only be triggered when the user/car is deemed to have stopped (e.g. transitioned from a dynamic, moving state to a static, stationary state). As well as identifying traffic congestion, the invention could also be used to determine which motorway service stations are most popular for people on a journey travelling between two given points.

**Shopping Mall**

The invention may provide an effective solution for determining which store a user has visited, or is currently in, by identifying a unique state for each store (e.g., a combination of data outputs relating to location, movement, ambient lighting and ambient noise, determined through the mobile device's sensors). Taking a semantic approach to identifying which stores a user has visited obviates the need to deploy dedicated infrastructure for providing indoor positioning.

**Network optimisation**

The invention may compare user state (context) against behaviour to identify where entering a given state might lead to a common behaviour (service usage). By linking behaviour with state, and predicting states across multiple users, a mobile network operator may then predict likely demand (usage) of services, and hence optimise the mobile network accordingly. This may include noting which content is downloaded when users enter a given state (which in this case may be defined according to the data outputs read from location sensor and a time sensor), and precaching content accordingly, based on the number of users likely to be entering that state (place) in a given timeframe.

**Network offload**

Increasingly, mobile network operators are looking at various network offload strategies that leverage small cell technologies (e.g. Wi-Fi and Femto cells) to better manage and optimise the capacity and service offered by a cellular network. With the present invention, it may be possible for handsets to search for WiFi points at the moment of state transition rather than periodically, hence increasing the likelihood of a WiFi network being joined as soon as the user arrives at a new destination, and increasing battery efficiency. This is in contrast to handsets continually polling for available WiFi networks.

**Enterprise presence**

Awareness of a change of state could be used in an enterprise context for providing more accurate presence information. Typically, personal computer systems monitor keyboard activity as an indicator of whether an individual is available or 'away', but this can deliver false information if, for instance, the individual is reading at their desk, or is engaged in a conference call, rather than actively using the PC keyboard. With the present invention, using the mobile handset as a trigger point in addition to the keyboard, the resulting enriched presence system would have a better understanding of the individual's actual context. By building up a time-stamped record of the states that a user enters, it may be possible to start predicting which state an individual might be transitioning to either on a short-term basis (e.g. 'has left desk, predict going to office canteen') or a longer-term basis (e.g. populating the user's calendar with availability information for the use of other individuals - e.g. 'David tends to work from home on a Friday so don't book meetings at the office location, but a conference call would be acceptable').

**User profiling**

By building up a record of the states (places) that are common to an individual, it becomes possible to assign semantic inference to that individual. For instance, a high proportion of states tagged as relating to shopping may be a leading indicator that the individual in question likes to shop (or works in a shop).

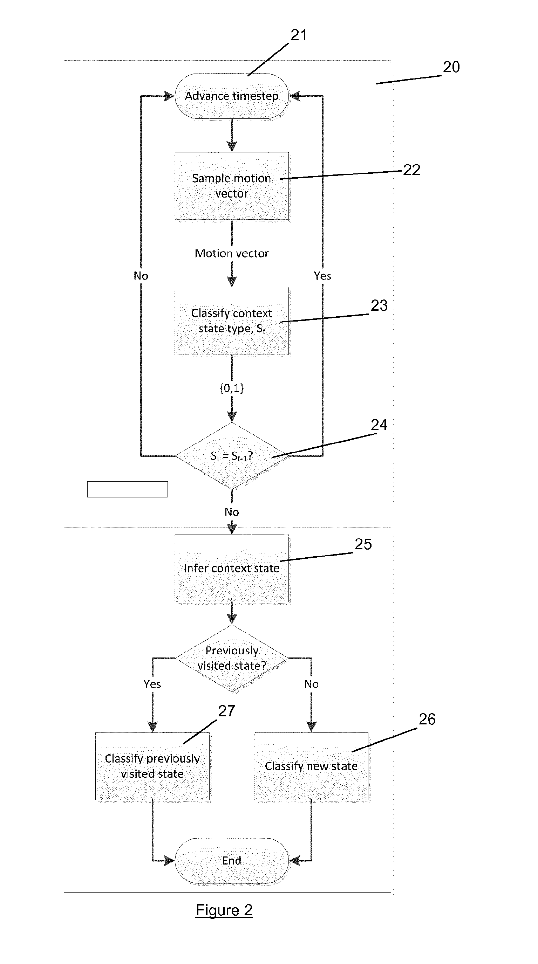

Figure 2 illustrates the steps taken in a method according to a preferred embodiment of the present invention. In this embodiment, a mobile device (e.g. mobile device 10 of the embodiment described above) determines that a state transition has occurred, and in particular may determine when the mobile device has transitioned from a known state to an unknown state. The mobile device may then identify the unknown state, thereby rendering it a known state.

In step 21, an internal clock in the mobile device advances one timestep forwards. An arbitrary time unit may be used, such as ten seconds. Thus, the mobile device may perform method 20 every timestep, for example every ten seconds.

In step 22, the mobile device takes a motion reading from a motion sensor (e.g. an accelerometer). The received data is a vector describing component-wise intensity of motion. If the mobile device is stationary, for example, then the motion sensor reads a motion vector of zero intensity for all three components. If the mobile device is moving at a constant velocity (constant magnitude and direction), then the motion sensor may read the corresponding intensity of motion.

In step 23, the mobile device classifies whether the device is in a 'static' or a 'dynamic' state, given the current motion vector. The mobile device may use a low-pass filter in series with a pre-trained binary classifier, together with a moving average filter (which stores a short history of previous binary classifier outputs). Further details of this step are described in the Annex, especially with reference to Figure 2 of the Annex.

In step 24, the mobile device determines whether the output state type at this timestep is equivalent in {0,1} to the previous timestep's output state type. If yes, no transition is classified, and the next iteration may begin. If no, a transition is classified, triggering the inference process and beginning the next timestep iteration.

In step 25, depending on the new context state type (static or dynamic), the mobile device takes a set of data samples from that type's sensors. The mobile device then performs statistical inference on these samples and decides whether the context state has previously been observed, or whether it is a new, previously unvisited state. If the state is a previously unvisited state, the mobile device assigns different labels to the classified state (step 26). If the state is a previously visited state, the mobile device assigns the label of the identified previously visited state to the newly classified state (step 27). This state is now an instance of the previously visited state. In order to classify a new state, the mobile device assigns a new, unique label to the newly classified state. This state is now the first instance of the newly labelled state.

In step 28, the inference process terminates.
Other example inference techniques are described in the Annex under "Inference and Classification" on page 10.

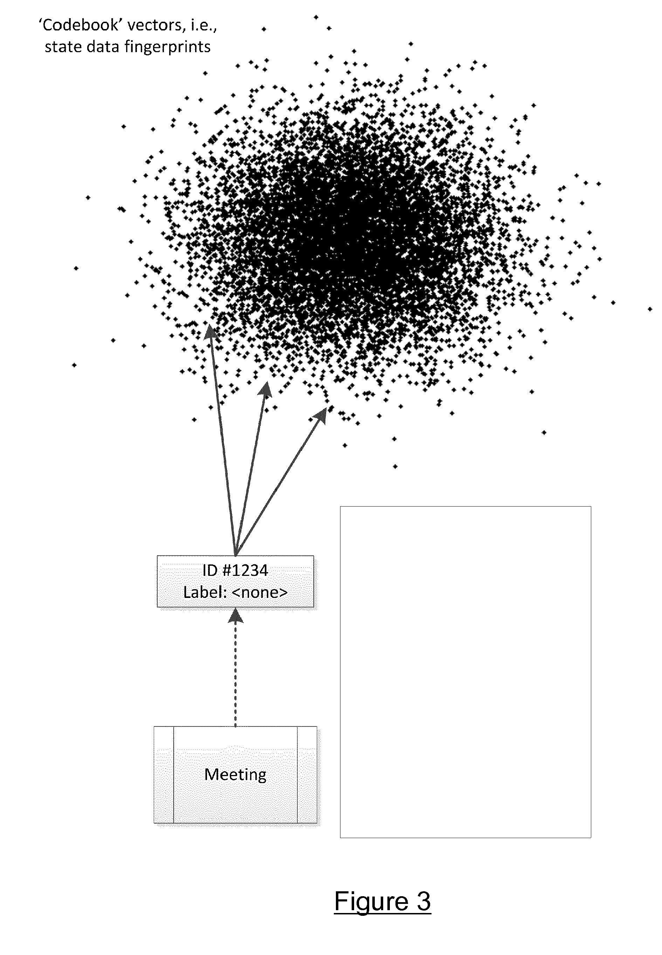

Figure 3 illustrates a method of user context labelling, in accordance with a preferred embodiment of the present invention. A state is described by a set of codebook vectors. Once a state has been identified, the user can assign a human-readable label to the state. Once assigned, the label will be displayed to the user on future classifications of the state (e.g. in Figure 3, state #1234). Before this label is applied, the state is identified only by a unique ID assigned by the identification process. Through an interface, the user can label the state and, upon labelling, all instances of that state (both past and future) will be associated with this label unless re-labelled.

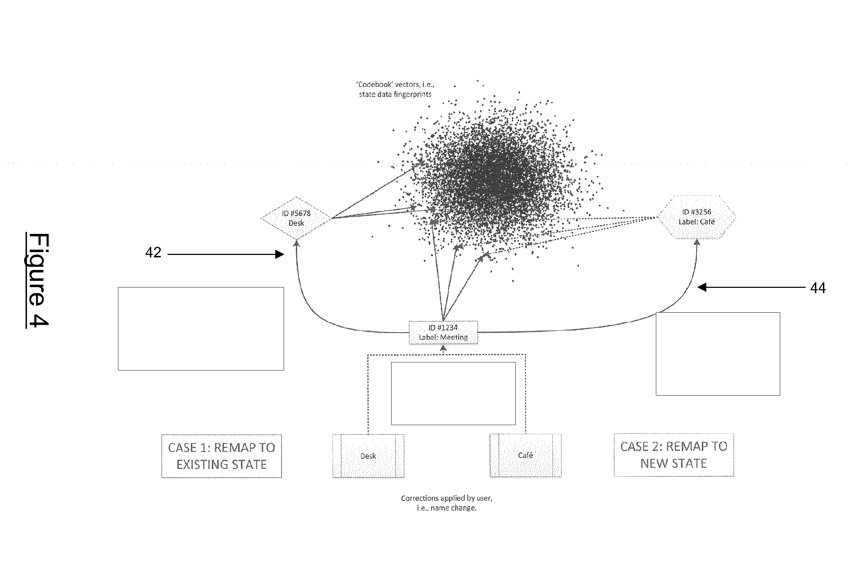

Figure 4 illustrates a method of user context creation, in accordance with a preferred embodiment of the present invention. The user can correct the system identification which, in turn, affects future system outputs. There are three types of corrective action:

   **Add:** The user creates a state that partially overwrites one or more identified states. The states that are partially overwritten by this new state are used to create the codebook vectors for the new state, and the user's new label is assigned to it. Furthermore, it is assigned a unique ID by the system.

**Edit:** There are two types of edit for an identified state: i) the user re-labelling the identified state as a previously labelled state (Case 1); and ii) the user re-labelling the identified state as a new, previously unidentified state (Case 2).

**Delete:** The user removes an identified state. If there is only one instance of this state, it is removed entirely. If not, this instance alone is removed and previous updates to the codebook vectors are undone.

In Figure 4, at step 42, the state with the label 'Desk' exists, and so, upon user correction, the sensor data from the incorrect instance of 'Meeting' may be used to update the codebook vectors for the state 'Desk'. At step 44, the state with the label 'Café' does not exist, and so a new state is created with a unique ID and label 'Café'. The sensor data from the incorrect instance of 'Meeting' are used to create the codebook vectors for the state 'Café'.

Many combinations, modifications, or alterations to the features of the above embodiments will be readily apparent to the skilled person and are intended to form part of the invention. Furthermore, a person skilled in the art will recognise that any of the features described as specifically relating to one embodiment may be used in any other embodiment, by making the appropriate changes.

## Event-based Context Sampling and Online Inference with Mobile Devices

**Abstract.** Inferring user context in real time is desirable for personalised mobile context aware applications. However, sampling context data with mobile devices and making accurate inferences at the most informative, effective and efficient time is non-trivial: sampling and inference at inopportune times can be costly to device resources, and incorrect inferences can annoy users. Requests for intervention from users can also become irritating, so unsupervised data collection and inference is desirable. In this paper, we present a novel event-based sampling method that uses mobile device motion to sample context data at the moment of context state *transition,* with a transition detection accuracy of 0.87 in local environments, e.g. an office. We use the transition sampling method to compare the performance of two Bayesian and frequentist inference methods that - in real time and unsupervised - classify user context from the sampled data with accuracies of up to 0.79 in local environments.

**Keywords:** Context, context awareness, context sampling, mobile, inference, real time, online, unsupervised learning

## 1 Introduction

The mobile device is evolving into an important tool for context aware systems. As devices such as smartphones become ever more sophisticated, with increased capabilities for sensing and computing, their utility for context awareness increases. Indeed, the mobile device offers unique data to context aware systems due to its ubiquity across diverse environments and its proximity to its users. It is a powerful enabler for sensing and computation in the real world. However, this mobility comes at a price. Mobile devices must be portable, so user interaction may be constrained and resources such as power, CPU, connectivity and sensor availability may be limited. Sensing and computation must therefore be efficient but also accurate if context aware applications are to be usable, effective and *relevant.* Relevance is important: context aware applications such as medical patient data collection [8], presence and availability systems [5], and time-management systems [15] must all sense data, make inferences about context from the data and react to the inferred context *in real time.*

The resource-accuracy trade-off in mobile context awareness means that online context sensing and inference is non-trivial. If we sample data from too many device sensors too frequently, we risk over-consuming the device's resources, but sensing too infrequently risks missing important context events [16]. Furthermore, making inferences too frequently not only consumes resources; it can also annoy the user if the inference triggers alerts (especially if the inferences are not correct). Making inferences too infrequently may adversely affect an application's usability and relevance. Inference is tightly coupled to data sampling. Mobile sensors, e.g. GPS, provide data of variable quality with varying availability, and inference methods must be robust to this. Moreover, relying heavily on user intervention to provide context data or correct context inferences can become irritating to users, with consequences for reliability, so unsupervised data collection and inference may be desirable.

The user's environment is also important for both context sampling and inference. Location inference in a *local,* sometimes indoor environment, e.g. a large shop, university campus or place of work where key fine-grained locations are closely spaced, is difficult as location sensor data - if available at all - can be too coarse. Furthermore, user activity recognition from a mobile device is difficult as the device is typically carried at a single on-body location, which may vary over time. All of these concerns mean that achieving effective mobile context awareness can is a complex challenge.

In this paper, we address the problem of real time context data sampling and inference with mobile devices in local environments. Our contributions are twofold:

- We present a novel event-based method of context sampling using context state *transitions* detected through mobile device motion. Through a field study with 14 participants in multiple local environments, we show that a mean context state transition detection accuracy of 0.87 can be achieved.
- Using context data sampled through transition detection, we compare and contrast two inference methods - one Bayesian and the other frequentist - that classify user context unsupervised and in real time. Through a second field study with 13 participants in multiple local environments, we show that an unsupervised inference accuracy of 0.79 can be achieved, and that there is no significant difference in the performance of the two inference methods.

We first contrast our work with related work in the field, before describing our approach to modelling context state transitions over time with Markov chains. Using this model, we describe an empirical study of detecting context state transitions using mobile device motion. We then show, through a second empirical study, how we perform context inference on the data sampled at the moment of transition, before presenting the performance results from both studies. Finally, we discuss the implications and limitations of our work, and plans for future research.

## 2 Background and Related Work

Our work focuses on two key areas: context sampling and inference. Therefore, we discuss background and related work from each of these fields.

Sampling context data from mobile users is non-trivial but valuable. Acquiring good-quality context data requires a balance between asking the user for her subjective interpretation of context, and relying on automatic inference from objective sources, e.g. sensors. Questions such as what, when and how to sample context are the key focus of work in the field. For subjective context sampling, the Experience Sampling Method (ESM), e.g. [2] - where users are encouraged to input context data following an alert - is a popular approach.

The state of the art includes event-based sampling, and various methods have been presented in recent years to acquire context data from the users themselves. Rosenthal *et al.* [19] use a decision-theoretic learning approach to "experience sampling" for triggering mobile interruptions, where context is initially sampled periodically to build a learned model of user interruptibility. Kapoor and Horvitz [11] compare and contrast a range of sampling methods, including a sophisticated decision-theoretic approach that builds a predictive sampling model of the user.

In the mobile environment, the MyExperience platform [6] and its applications, e.g. [7], sample both subjective context, i.e., user experience, and objective context, i.e., sensor data. The sensor data is logged periodically and used as an event-based trigger for experience sampling. Mobile event-based sensor sampling methods are used in both the AndWellNess [8] and EnTracked [12] systems for experience sampling and position tracking respectively. Furthermore, event-based sampling using mobile device accelerometers and cellular events is used to good effect for determining transportation modes by Reddy *et al.*[17]. Changes in motion are a popular event used to trigger context sampling in real time: work by Ho and Intille [9], use motion-based sampling with body-worn accelerometers to infer user activity transitions.

In contrast to the work above, our context sampling contribution periodically samples and analyses motion data from a single mobile device accelerometer, upon which we implement a novel binary classification process that uses *sustained* motion over short periods of time to detect context state transitions. These, in turn, can be used for event-based context sampling.

Our other contribution to context inference contribution contrasts work in the fields of context awareness and activity recognition with mobile devices. Related contributions to mobile context awareness in recent years include: the UbiFit Garden [3], which makes inferences about user activity through a specialist mobile sensing platform; the work of Krause *et al.* [13], which uses online machine learning with bespoke mobile hardware to infer user context; and Isaaman *et al.* [10], who identify users' important context locations from cellular network data. This is closely related to our work, albeit with key differences: our inferences are made in real time from on-device location and activity data in a local environment, i.e. where key locations are closely spaced and both indoors and outdoors, using samples taken at moment of context state transition. Isaacman *et al.,* in contrast, use network-side data to perform large-scale offline inference of users' important locations in larger environments. Other closely related work is that of Santos *et al.* [20], who use mobile devices as part of a wider inference architecture to infer user context in real time from periodic samples. In contrast, we do not use any additional hardware beyond the mobile device, and our context sampling and inference is event-based rather than periodic.

Within the activity recognition field, there are a number of relevant contributions where mobile device sensors are used to classify user activities. Figo *et al.*[4] extract a multitude of features that can be used to classify a pre-defined list of activities from a mobile device accelerometer. Kwapisz *et al.*[14] also infer various pre-defined activities from a mobile device accelerometer. Ho and Intille [9] show that transitions between activities can be detected using multiple body-worn accelerometers, and Riboni and Bettini [18] use a mobile device as part of a larger architecture (including body-worn sensors) to infer a pre-defined list of activities. These contributions - in addition to many activity recognition contributions - rely largely on supervised learning techniques with a fixed set of objective activities or context for a system to recognise, e.g.[1][14][21]. Moreover, recognition techniques using smart-homes or body-worn sensors, e.g. [1][9], require specialist hardware, which can affect scalability and deployment. In contrast, our context inference is unsupervised and does not require any *a priori* inference training. Furthermore, our system evolves new context states over time and does not require a fixed set of labels to be supplied. Rather than trying to classify an objective location or activity, our work attempts to find patterns within context data that differentiate between multiple locations and activities, and to classify them without supervision.

## 3 Approach

In this section we outline our approaches to modelling context state transitions, detecting context state transitions from mobile device motion, and inferring context in real time from mobile device data. We describe two studies in which we shadow a sample of mobile users in their local environments, and attempt both to detect their context state transitions and to infer their context states in real time from mobile devices. The results of the studies are then presented in Section 4.

### 3.1 Defining and Modelling Context State Transitions

Before approaching the problems of real time context sampling and inference with mobile devices, we define and model users' context states and their transitions. Following Figure 1, we model a user's context as a Markov chain in a countably infinite state space, i.e., each state can be directly mapped to the set of natural numbers N. We represent context sequences with a labelled multidigraph, i.e., a directed graph with multiple node types and labelled edges. Each state is one of two types:

- Static context state: a context state with a single significant geographic location.

- Dynamic context state: a context state of transit between significant geographic locations.

**Fig. 1.** Modelling a user's context as a Markov chain in a countably infinite state space. The labelled multidigraph on the left shows a short chain of heterogeneous – static (S) and dynamic (D) – context states, and the time series on the right shows the transitions over time. S4 is a static state that is not yet defined or visited at time $t$.

In our multidigraph model, a user is always in a static or dynamic context state, and must transition heterogeneously, i.e., they must transition from a static state to a dynamic state or *vice versa.* It is at the moment of these transitions that we wish to sample context data. For real time context classification, online inference methods must account for the possibility that the user has transitioned into a new, previously unvisited state.

### 3.2 Detecting Context State Transitions in Real Time

In our multidigraph model, the key difference between the dichotomous states is the presence or absence of *motion.* Motion data can indicate whether the user is in a static or dynamic context state, and *when* they transition between states. Because increasing numbers of mobile devices contain accelerometers, we are interested in the extent to which can we detect a user's context state transitions in real time using mobile device motion data. However, to do so, we must address a number of problems:

1. Device motion may be a manifestation of noise or a less significant activity, e.g. the user idly playing with her device. Conversely, device motion may not always reflect user motion, e.g. the user leaving her device on a desk.

2. The intensity of motion that indicates a state of static or dynamic context may vary between contexts and between users.

3. Motion at a single point in time, or over a short period of time, may not provide enough information about whether the user is in a state of static or dynamic context. Conversely, increasing the amount of historical data to be considered could affect decision latency.

These problems provide a rationale for our process of detecting context state transitions from mobile device motion data. The goal of the process is - in real time and periodically - to output a classification of 'low' or 'high' reflecting a

**Fig. 2.** The context state type detection process for a single timestep $k$. A low-pass filter processes the raw motion vector $\mathbf{x}_k$. The filtered vector is passed to a classifier, which outputs a real number in $[0, 1]$. Finally, a moving average filter outputs a classification value in $\{0, 1\}$ to indicate the context state. A switch from 0 to 1 or *vice versa* between timesteps indicates a context state transition.

state of static or dynamic context respectively. The switch between high and low (and *vice versa*) is a transition between context states, and it is this switch that will control the data sampling for later context inference. Figure 2 illustrates one iteration of the state type detection process, and the following subsections describe its design.

**Low-pass Filter** The low-pass filter addresses problem 1. It removes the force of gravity from the raw motion data at timestep $k$, $\mathbf{x}_k$, and recursively provides relative motion over time:

$$\mathbf{f}_\alpha(\mathbf{x}_k, \mathbf{y}_{k-1}) = \mathbf{x}_k - \mathbf{y}_k \qquad (1)$$

Where $\mathbf{y}_k$ is defined:

$$\mathbf{y}_k = \alpha \mathbf{y}_{k-1} + (1 - \alpha)\mathbf{x}_k \qquad (2)$$

Here, $\alpha$ is a smoothing parameter that governs how much excitation the filter requires before allowing data to pass through. By varying this parameter, we can vary the dampening of motion to control unimportant 'noise'.

**Classifier** The classifier addresses problem 2. It is very unlikely for motion intensity to be consistent both within and between context states, and motion patterns will vary between users and the device's on-body location. We use a logistic regression classifier to output values in [0, 1] that represent the probability of a dynamic context state (or the complement probability of a static context state) at timestep $k$, given the motion intensity:

$$g_{\boldsymbol{\theta}}(\mathbf{f}) = \frac{1}{1 + e^{-\boldsymbol{\theta}^{\mathrm{T}}\mathbf{z}}} \qquad (3)$$

Where $\mathbf{z}$ is a column vector in R$^2$, defined:

$$\mathbf{z} = (1, \|\mathbf{f}\|)^{\mathrm{T}} \qquad (4)$$

Here, $\theta$ is a parameter vector in R$^2$ that controls the classifier threshold. We can learn these parameters for a specific user by training the classifier on a sample of the user's motion data in various context states.

**Moving Average Filter** The moving average addresses problems 1 and 3. To minimise the effect of transient and unimportant motion, we can smooth the classifier outputs over a fixed time window, $\tau$, so that only sustained motion can trigger a transition. This uses historical data and, as such, requires a necessary lag to operate. In addition to varying $\tau$, we can use weighting methods, *w*, for the historical data, which can vary the influence from more recently acquired data. The moving average outputs high if the weighted average of the classifier outputs in $\tau$ is $\geq 0.5$ and low otherwise.

### 3.3 Study I: Detecting Context State Transitions from Mobile Device Motion Data

To test our system and analyse the key parameters, we conducted an empirical study of mobile users in a local environment. We recruited 14 participants (11 male and 3 female; aged 20-38, mean age 27) from three different local environments: an office (7 participants), a university (6 participants), and a town centre (1 participant). We asked them to describe their typical day chronologically through transitions between self-identified states of static and dynamic context. Immediately following the interview, we asked them to choose a subset of these context states and transitions that that could be performed in a field study. Each participant was equipped with an Android mobile device containing an accelerometer, from which the output was continually logged at $\approx 16$Hz throughout the study. The participants underwent a training session to train their logistic regression parameters, during which they were asked to perform example states from their static and dynamic context sets, e.g. sitting at a desk or walking, while carrying the device in a pocket or a bag. Each training session lasted 30 seconds per state type.

The participants were then asked to perform their previously identified context sequences in the corresponding local environment. A researcher shadowed each participant and recorded the timestamp and label for each transition between static and dynamic context. Due to the difficulties involved in collecting such fine-grained data over an extended period of time, and the stable nature of static context data, the participants were asked to perform shortened versions of each static context state, e.g. a static state "working at desk", which would typically last for 1-2 hours, was shortened to 5-10 minutes. The dynamic states were not shortened.

*A Posteriori* Analysis Upon completion of the field data collection, we analysed the data in order to observe the effects of the configurable parameters on the transition detection process. The parameters are: $\alpha$, the low-pass filter smoothing factor; $\theta_i$, the participant-specific logistic regression parameters; *w*, the weighting method for the moving average filter; and $\tau$, the time window for the moving average filter. We sample from the recorded motion data at 1Hz, so the difference between timesteps *k* is constant at 1 second. For the participant-specific logistic regression parameters, $\theta_i$, we used each participant's training data to find the maximum likelihood parameters - $\hat{\theta}_i$ - for that participant *i*. Once found, $\theta_i$ was held fixed at $\hat{\theta}_i$ for each participant *i* during analysis of the free parameters.

$\alpha$ can take values in [0,1], and we took discrete samples at intervals of 0.01. We chose three weighting methods, *w*, to test:(i) the simple moving average (SMA), where all classifier outputs in time window $\tau$ are given equal weight; (ii) the weighted moving average (WMA), where the classifier outputs are weighted linearly over $\tau$; and (iii) the exponential moving average (EMA), where the classifier outputs are weighted exponentially over $\tau$ as follows, $\frac{2}{T_n+1}, T_n \leq \tau$, where $T_n$ is the time-lag between the current timestep *k* and timestep *n*. As a benchmark, we also tested the process with no moving average. Finally, we tested 6 time windows $\tau$ at intervals of 5 seconds over 5-30 seconds. These free parameters give a design space of $((6 \times 3) + 1) \times 100 = 1900$ designs to test.

**Performance Measure** To measure the performance of each design, we use the F1 accuracy score which accounts for true positive (*tp*), false positive (*fp*) and false negative (*fn*) classifications. Their descriptors are as follows:

- A true positive (*tp*) occurs when the process classifies a correct transition according to ground truth, i.e., low to high when the participant transitioned into a dynamic context state, and high to low when the participant transitioned into a static context state. This must be made at the time of the ground truth transition, accounting for moving average lag $\tau$.
- A false positive (*fp*) occurs when the process classifies an incorrect transition according to ground truth, i.e., classifying a transition outside a viable ground truth transition.
- A false negative (*fn*) occurs when the process fails to classify a transition according to ground truth, i.e., not classifying a transition at the time of a viable ground truth transition.

To account for small deviations between the researcher-recorded ground truth and the exact moment of context state transition, a ground truth was considered viable for 5 seconds either side of its recorded timestamp. The results are described in Section 4.

### 3.4 Online Context Inference

Having tackled the problem of detecting context state transitions, we approached the problem of online context inference using mobile device data. Here, we are interested in the extent to which we can infer user context in real time using mobile device data. Key questions for online inference with mobile devices are:

1. When is a good time to make an inference?

**Fig. 3.** The architecture of the inference process. The transition detection process outputs 0 or 1 corresponding to a transition into a static or dynamic context state. This controls a virtual single-pole double-throw (SPDT) switch that triggers sampling of static (0) or dynamic (1) features. The inference process makes a classification based upon the input data.

2. What data should we use? The data available to make inferences at any given time may be of variable quality and availability, e.g. GPS data.

3. What inference method should we use? There are two key probabilistic approaches to making inferences: Bayesian and frequentist. Both have their merits and weaknesses. In the Bayesian approach, we can incorporate prior beliefs from historical data, and compare competing hypotheses in light of new data without having to establish confidence intervals. In the frequentist approach, we can make decisions based on statistical hypothesis testing without having to determine prior beliefs.

The general architecture for our inference process is shown in Figure 3. We use the transition detection process from Study I to address problem 1: the output of this process controls a virtual single-pole double-throw (SPDT) switch, which allows sampling of features from static or dynamic context sensors at the moment of context state transition. These features can then be passed to the inference process, which classifies the context state.

### 3.5 Study II: Online Context Inference with Mobile Device Data

For our second empirical study, we recruited 13 participants (12 male and 1 female; aged 21-39, mean age 28), 6 of whom were also participants in Study I. The time between Studies I and II was 6 months, and these participants' context routines had all changed: all had changed roles (and therefore their "typical days") within their previous local environment, and one had also changed environments. 8 of the participants were office workers, and the remaining 7 were university students. We asked each participant to describe 3 typical days' worth of their context i.e. key significant locations and their transitions between them in their chosen local environment. Again, we asked them to perform them in the environment while carrying an Android 2.3 mobile device. Each mobile device was running the transition detection process from Study I with the best parameters as determined by the results from Study I. As illustrated in Figure 3, this process controlled the sampling from the mobile device sensors depending on the context state type. As before, each participant was shadowed by a researcher who recorded the ground truth states and timestamps. Again, the participants were asked to shorten the duration of their static context states, and the dynamic context states were not shortened.

In order to estimate their logistic regression parameters, $\theta_i$, for the transition detection process, each participant underwent the same parameter training process as in Study I.

**Sampling and Feature Extraction** Addressing problem 2, we extracted the following features:

For static feature extraction, we used a combination of two location sensors, the device GPS and either cellular or Wi-Fi, depending on availability. The sampling process first attempted to sample GPS data and, if GPS was not available (e.g. the participant was indoors), it sampled coarser Wi-Fi and cellular data. If this failed, then no inference was made (a false negative). We used two features, the degrees latitude and degrees longitude, so each sample was a row vector in $R^2$. 10 samples were taken at each transition into a static context state.

For dynamic feature extraction: we used the device accelerometer. We used two features: the sample mean and standard deviation of the normalised, filtered motion vector length over a 5 second time period at the moment of transition into a dynamic context state. Each sample was therefore a row vector in $R^2$.

**Inference and Classification** To address problem 3, we implemented both a Bayesian and a frequentist inference process which made classifications independently. At the moment the context data is sampled, there are two possible hypotheses (see Figure 1) given the inference-time hypothesis that the state type is correct:

- $H_0$: The data were sampled from the participant in a context state that she has previously visited (of homogeneous type).
- $H_1$: The data were sampled from the participant in a context state that she has not previously visited (of homogeneous type).

We refer to the newly sampled data set as $N_0 \times p$ matrix $\mathbf{X}_0$ and to the classification label as $c_k$ - where $N_0$ is the number of independent samples, and $p$ is the dimension of the feature space. To test the above hypotheses, we need to identify a candidate state for the previously visited context state under $H_0$. Rather than performing exact enumeration and inference over all previously visited states (which is costly), we use a nearest-neighbour search in feature space to return a second data set, $\mathbf{X}_1$, which is all data labelled with the nearest neighbour state's class label. The distance metric is the Euclidean distance between the $\mathbf{X}_0$ sample mean, $\overline{\mathbf{x}}_0$ and the query state's sample data mean $\overline{\mathbf{x}}_1$.

For the frequentist approach, we use a multivariate version of the two-sample Student's t-test - the two-sample Hotelling's $T^2$ test - using the two data samples described above. We reject $H_0$ in favour of $H_1$ at $p < 0.01$, i.e., when the probability of observing $\mathbf{X}_0$ given $H_0$ is $< 0.01$.

The Bayesian approach uses Bayesian model comparison, where we define two candidate models, $M_0$ and $M_1$ for hypotheses $H_0$ and $H_1$ respectively. We use a new data set, the augmented matrix $\mathbf{X}_2 = [\mathbf{X}_0^{\mathrm{T}}|\mathbf{X}_1^{\mathrm{T}}]^{\mathrm{T}}$ and make an inference about which model best fits these data. $M_0$ represents the hypothesis that the data in $\mathbf{X}_2$ are sampled from a single context state, therefore we use a unimodal normal distribution with parameters mean $\mu$ and covariance $\Sigma$:

$$\mathcal{M}_0 : \mathbf{X}_2 \sim \mathcal{N}(\boldsymbol{\mu}, \boldsymbol{\Sigma}) \qquad (5)$$

We use the unbiased estimators of the $\mathbf{X}_2$ mean, $\overline{\mathbf{x}}_2$, and covariance, $\mathbf{S}_2$, for the parameters. $M_1$ represents the hypothesis that the data in $\mathbf{X}_2$ are sampled from two *different* context states. We use a bimodal distribution, parameterised by mixing coefficients, $\{\pi_0, \pi_1\}$, means $\{\mu_0, \mu_1\}$ and covariances $\{\Sigma_0, \Sigma_1\}$:

$$\mathcal{M}_1 : \mathbf{X}_2 \sim \sum_{i=0}^{1} \pi_i \mathcal{N}(\boldsymbol{\mu}_i, \boldsymbol{\Sigma}_i) \qquad (6)$$

We use the unbiased estimators of each $\mathbf{X}_i$ mean $\overline{\mathbf{x}}_i$ for the position of each mode $i$, and covariance $\mathbf{S}_i$ for each covariance. The mixture coefficients are set to $\frac{N_i}{N_2}$, where $N_i$ is the number of independent samples in data set $\mathbf{X}_i$. For Bayesian model comparison, we calculate the conditional probability ratio:

$$\frac{P(\mathcal{M}_0|\mathbf{X}_2, c_{k-1})}{P(\mathcal{M}_1|\mathbf{X}_2, c_{k-1})} = \frac{P(\mathbf{X}_2|\mathcal{M}_0, c_{k-1})P(\mathcal{M}_0|c_{k-1})}{P(\mathbf{X}_2|\mathcal{M}_1, c_{k-1})P(\mathcal{M}_1|c_{k-1})} \qquad (7)$$

Where $c_{k-1}$ is the classification of the most recently visited homogeneous state $C_{k-1}$. (We drop this to keep the notation uncluttered.) Each likelihood, $P(\mathbf{X}_2|M_i)$, can be approximated by the Bayesian information criterion (BIC), which penalises model complexity:

$$\ln P(\mathbf{X}_2|\mathcal{M}_i) \simeq \ln P(\mathbf{X}_2|\hat{\boldsymbol{\theta}}_i, \mathcal{M}_i) - \frac{1}{2}M_i \ln N_2 \qquad (8)$$

$\hat{\theta}_i$ are the chosen parameters for $M_i$, and $M_i$ is the number of parameters in $M_i$ (2 for $M_0$, and 6 for $M_1$). As $M_1$ is more complex than $M_0$, it will likely overfit the sample data and adversely affect the inference performance. Using the BIC can reduce this effect.

For the priors, $P(M_i)$, we would like to quantify our prior belief in each hypothesis. We could incorporate historical inferences by training a first-order Markov model and learning the probability of entering a context state $B$ given the most recently visited homogeneous state $c_{k-1}$. However, to implement such a model requires a finite state-space, and online inference - in our model where the user can enter a new, previously unseen context state (see Figure 1) - is performed in a countably infinite state space. Instead we estimate smoothed priors as follows:

$$P(\mathcal{M}_0) \propto f_{c_{k-1}B} + 1 \qquad (9)$$

$$P(\mathcal{M}_1) \propto |V_{c_{k-1}}| + 1 \qquad (10)$$

Under $H_0$, $B$ is the nearest-neighbour context state in feature space, and $f_{c_{k-1}B}$ is the number of times the participant has visited $B$ from $c_{k-1}$ in the past. Intuitively, the more a participant visits state $B$ from state $c_{k-1}$, the greater our bias is toward $H_0$. Under $H_1$, $B$ is a previously unvisited context state. $|V_{c_{k-1}}|$ is the cardinality of $V_{c_{k-1}}$, which is the set of *homogeneous* context states of which $c_{k-1}$ was a previously visited state. Thus, the greater the number of unvisited context states that a participant visits from $c_{k-1}$, the greater our bias is toward $H_1$. Both $P(M_0)$ and $P(M_1)$ share the same normalising constant such that the prior distribution $P(M)$ sums to unity but, as we are comparing models in Equation 7, these constants algebraically cancel and we need not calculate them.

Because the inference process is unsupervised, the state classification labels must be generated by the process itself. $H_1$ classifications of $c_k$ are labelled with a unique integer, and $H_0$ classifications with the nearest neighbour state $B$'s integer label. The Bayesian inference process rejects $H_0$ if the ratio in Equation 7 is < 1, and rejects $H_1$ if the ratio is $\geq$ 1.

**Performance Measure** As before, we use the F1 score for test accuracy. The classification terms are as follows:

- A true positive (*tp*) occurs when the inference process classifies a context state that is correct according to ground truth. This occurs if the process classifies a new context state at the moment the participant enters a new, previously unvisited context state, allowing for moving average lag $\tau$. This also occurs if the process classifies the correct previously visited state at the moment the participant enters the previously visited state.
- A false positive (*fp*) occurs when the inference process classifies a context state that is incorrect according to ground truth. This occurs if the process classifies a new context state at the moment the participant enters a previously visited context state or *vice versa.* This also occurs if the process classifies an incorrect previously visited context state when the participant enters a previously visited context state. This further occurs if the process classifies any context state when the participant has *not* undergone a context state transition, i.e. a false positive caused by the transition detection process, as in Study I.
- A false negative (*fn*) occurs when the inference process fails to make a classification according to ground truth. This occurs when the process fails to output a classification at the time of a viable transition into a new state, e.g. due to transition detection failure (see Study I) or sensor failure.

**Fig. 4.** Study I: (*left*) the F1 performance for each moving average filter type *w*, with τ = 30 seconds, as α varies; and (*right*) the F1 performance for each moving average filter type *w* as τ varies. α for each *w* is fixed at the peaks in the left figure.

Again, to account for small deviations between the researcher-recorded ground truth and the exact moment of context state transition, a ground truth was considered viable for 5 seconds either side of its recorded timestamp. The results of Studies I and II are presented in Section 4.

## 4 Results

**Study I: Detecting Context State Transitions from Mobile Device Motion Data** For the first study, the local environment for participants 1-6 was a university campus; 7-13 was an office; and for 14 it was a town centre. The median number of context state transitions for the 14 participants was 23. Common static state context labels included: "working at desk"; "café"; "lunch at canteen"; "lecture hall"; "car park"; "teaching"; "lab"; "gym" and "meeting". Common dynamic labels included: "walking" (all participants); "cycling" (participant 4); and "driving" (participant 14).

**Fig. 5.** Study I: F1 distribution for each participant, grouped by moving average filter type *w* for a τ = 30 seconds. α for each *w* is fixed at the peaks from Figure 4a.

**Fig. 6.** Study II: (*left*) The context multidigraph for participant 8 showing the static (elliptical) and dynamic (rectangular) context states labelled with the participant's own labels. The edges are the context state transitions labelled with sets of ordered occurrences; (*right*) the context state and transition distribution.

The highest scoring design, with mean F1 performance of 0.87, has moving average smoothing method $w$ = SMA, time window $\tau$ = 30 seconds, and low-pass filter smoothing factor $\alpha$ = 0.63. Figure 4a shows how the mean F1 score varies with $\alpha$ for each moving average type $w$. Peak $\alpha$ values are: 0.63 for $w$ = SMA; 0.64 for $w$ = EMA; 0.78 for $w$ = WMA and 0.64 for no moving average. There is a significant improvement in mean F1 performance from no moving average by all moving average types (Mann-Whitney $U$ test; $N$ = 14; $p \ll 0.01$ for all types). At peak $\alpha$ and $\tau$ = 30s, there is a significant difference (Mann-Whitney $U$ test; $N$ = 14; $p < 0.05$) in mean F1 performance at the 0.05 level between the SMA and the other $w$ types. There is no significant difference at the 0.05 level between the WMA and the EMA. Figure 4b shows how the mean F1 score varies with time window $\tau$ for each moving average type $w$. There is no significant improvement in mean performance at the 0.05 level for $\tau$ > 15 seconds for SMA, and $\tau$ > 10 seconds for both the WMA and the EMA. Figure 5 shows the F1 score distribution for each participant, grouped by moving average type. The sample mean and standard deviation for each w are: 0.88, 0.12 (SMA); 0.74, 0.16 (WMA); and 0.73, 0.2 (EMA).

**Study II: Online Context Inference with Mobile Device Data** Here we present our results from Study II using the best transition detection design from Study I. Participants 1,2,9,10,11 and 12 also participated in Study I, and retain the same identifier. The environment for participants 1,2,8,11 and 13 was a university campus, and for the remainder it was an office. Figure 6a shows the context state multidigraph for participant 8. The median number of unique

**Fig. 7.** Study II: F1 score distribution for both inference methods.

static context states for the 13 participants was 8, and the distribution of unique states and transitions is shown in Figure 6b. Common location labels used by the participants to describe their static context included: "working at desk"; "meeting area"; "canteen"; "café"; "library"; "lab"; "printer" and "gym". The median number of unique dynamic context states was 1: "walking" for all participants except participant 5, who also included "running". The median number of context state transitions for the 13 participants was 28. Figure 7 shows the F1 performance distribution over the 13 participants of Study II for the Hotelling's $T^2$ and Bayesian inference methods. The mean F1 performances are: 0.79 for the Hotelling's $T^2$ method (s = 0.13), and 0.78 for the Bayesian method (s = 0.14). There is no significant difference in mean performance between the two methods (Mann-Whitney $U$; $N$ = 13 ; $p < 0.92$).

**5 Discussion**

Here we discuss the implications and limitations of our approach and results. We asked to what extent we could detect a user's context state transitions in real time using mobile device motion data. The results from Study I suggest that it can be done well in a local environment with no specialist hardware. The F1 score of 0.87 from the best process design, and the significant improvement observed when using a moving average filter, shows that mobile device motion over time is a good indicator of when a user changes context state in a local environment. Furthermore, as we have shown with the inference process, using the detected transitions as an event trigger captures many important events in users' typical context sequences.

We also asked to what extent we could infer user context in real time with mobile devices. The F1 scores of 0.79 and 0.78 - for the Hotelling's $T^2$ and Bayesian inference methods respectively - show that good inference can be achieved in real time using mobile devices in a local environment. By using context state transitions as event-based sampling triggers, we can not only sample from high-cost device sensors for a short period of time, but we can also capture data for inference close to the moment of transition into a new context state. The transition detection process can also act as a trigger for other applications, e.g. notification delivery. The observed performance implies that it is possible to capture many users' self-defined "important" context states in a local environment *at the moment of context state transition.* This event-based method compares favourably to random or periodic mobile user experience sampling methods, which can miss key events while impacting on device resources.

The significant improvement from the absent case by all moving average types w in Figures 4a and 5 shows that smoothing transient motion and requiring *sustained motion over time* is an effective method of detecting user context state transitions, though $\alpha$ is invariant below $\approx 0.9$ for all *w*. The significant improvement using the SMA shows that equal weighting of data in $\tau$ - rather than biasing toward recency - is the superior choice. The performance effects of $\tau$ also result in an accuracy-latency trade-off, where increasing $\tau$ toward 30s improves performance at the cost of inference latency. The transition detection system operates entirely on the device without further infrastructure, e.g. server connectivity, and a with just a short training session. This results in a standalone mobile service that can report transitions to any application that requires them.

The performance scores of 0.79 and 0.78 - for the Hotelling's $T^2$ and Bayesian inference methods respectively - show that using the context state transitions to trigger sensor sampling and context inference appears to work well in a local environment, i.e. inferences are correct for the majority of context states, for the majority of studied participants. Even in the face of noisy data, the use of probabilistic inference allows good performance, as the inference methods are robust to sensor noise and ambiguity. During Study II, the majority of location samples were taken from Android's cellular/Wi-fi location estimates as GPS was unavailable. These location estimates are coarse-grained compared to GPS. However, using both inference methods, we were able to differentiate between many users' significant locations in a local environment, even though many were in close proximity and indoors, e.g. meeting areas and desks. There appears to be no significant difference between the Bayesian and Hotelling's $T^2$ inference methods in the short term, therefore we would suggest using the simpler Hotelling's $T^2$ inference method. However, the Bayesian method and its historic bias will likely affect the performance difference between the two methods in the long term.

Performance in Study I is affected by two causes: false positive and false negative classifications. The descriptors for these are in Section 3.3, but there are various causes for each: false positives were generally caused by participants undergoing periods of "start-stop" motion during either context state type, e.g. participant 6 moving within a large shop; participant 4 cycling; and participant 14 driving. False negatives were generally caused by participants leaving their device at their desk to travel to a nearby location, e.g. a printer, or undergoing short periods of static or dynamic context (with duration $< \tau$), e.g. stopping to talk to a colleague *en route* to another location (participant 13).

Our studies were focused on local environments - offices, campuses and a town centre - so we cannot generalise the performance from these results to multiple, more global, environments. Early indications of how the detection process deals with vehicular motion, i.e., participant 14, suggest that the stop-start nature of driving will impact on performance. However, data fusion with other sources of context data that suggest, for example, that the user is in a vehicle, e.g. in-car Bluetooth, could improve performance in these situations.

In Study II, a key cause of false positives appeared to be data ambiguity, e.g. a highly coarse location reading or momentary drop in device motion. This impacted on the performance of each inference method in different ways. The Bayesian method can be robust to sample data noise if the samples are taken from a user in one of her more frequent states, e.g. working at a desk. Here, prior belief (the user is more likely to be in the frequent location) can outweigh the influence of noisy sample data. The more objective but less robust Hotelling's $T^2$ method outperformed the Bayesian method when samples were taken in a less frequent context state *close to* a frequent state in feature space (it is not biased by historical data as the Bayesian method is). The key cause of false negatives was sensor failure, e.g. participants in a location with no radio coverage.

Finally, the comparatively short duration of Study II means that we cannot draw conclusions about the long term inference performance of the Hotelling's $T^2$ and Bayesian inference methods, where the Bayesian method incorporates historical data. In the short term, there is no significant difference. It is difficult to record fine-grained ground truth accurately in real time without using ethnographic methods, however, such methods are difficult and resource intensive beyond a small number of participants and a short duration, so long term performance evaluation is difficult.

## 6 Conclusion and Future Work

In this paper, we have shown that by modelling users' context sequences as temporally evolving chains of static and dynamic context states, we can use the *transitions* between these context states as event-based triggers for context sampling. A field study showed that using mobile device motion data is a good indicator (0.87 accuracy) of when these transitions occur in a local environment. Furthermore, we have shown that using transition-triggered context sampling with Bayesian or frequentist inference can lead to unsupervised context classification accuracies of 0.79 in a local environment.

For future work, we plan to extend evaluation of both sampling and inference in the longer term and across multiple environments. We also plan to investigate both applications and the effects upon performance of different levels of user intervention, i.e. users correcting inference decisions.

**References**

1. Bao, L., Intille, S.: Activity Recognition from User-annotated Acceleration Data. In: Proc. Pervasive '04. pp. 1-17 (2004)
2. Consolvo, S., Walker, M.: Using the Experience Sampling Method to Evaluate Ubicomp Applications. IEEE Pervasive Computing 2(2), 24-31 (2003)
3. Consolvo, S., Mcdonald, D.W., Toscos, T., Chen, M.Y., Froehlich, J., Harrison, B., Klasnja, P., Lamarca, A., Legrand, L., Libby, R., Smith, I., Landay, J.A.: Activity Sensing in the Wild: A Field Trial of UbiFit Garden. In: Proc. CHI '08. pp. 1797-1806 (2008)
4. Figo, D., Diniz, P.C., Ferreira, D.R., Cardoso, J.M.P.: Preprocessing Techniques for Context Recognition from Accelerometer Data. Personal and Ubiquitous Computing 14(7), 645-662 (2010)
5. Fogarty, J., Lai, J., Christensen, H., Christensen, J.: Presence versus Availability: the Design and Evaluation of a Context-aware Communication Client. International Journal of Human-Computer Studies 61(3), 299-317 (2004)
6. Froehlich, J., Chen, M.Y., Consolvo, S., Harrison, B., Landay, J.A.: MyExperience: A System for In situ Tracing and Capturing of User Feedback on Mobile Phones. In: Proc. MobiSys '09. pp. 57-70 (2007)
7. Froehlich, J., Dillahunt, T., Klasnja, P., Mankoff, J., Consolvo, S., Harrison, B., Landay, J.: UbiGreen: Investigating a Mobile Tool for Tracking and Supporting Green Transportation Habits. In: Proc. CHI '09. pp. 1043-1052 (2009)
8. Hicks, J., Ramanathan, N., Kim, D., Monibi, M., Selsky, J., Hansen, M., Estrin, D.: AndWellness: An Open Mobile System for Activity and Experience Sampling. In: Proc. WH '10. pp. 34-43 (2010)
9. Ho, J., Intille, S.S.: Using Context-aware Computing to Reduce the Perceived Burden of Interruptions from Mobile Devices. In: Proc. CHI '05. pp. 909-918 (2005)
10. Isaacman, S., Becker, R., Cáceres, R., Kobourov, S., Martonosi, M., Rowland, J., Varshavsky, A.: Identifying Important Places in People's Lives from Cellular Network Data. In: Proc. Pervasive '11. pp. 133-151 (2011)
11. Kapoor, A., Horvitz, E.: Experience Sampling for Building Predictive User Models: a Comparative Study. In: Proc. CHI '08. pp. 657-666 (2008)
12. Kjærgaard, M.B., Langdal, J., Godsk, T., Toftkjær, T.: EnTracked : Energy-Efficient Robust Position Tracking for Mobile Devices. In: Proc. MobiSys '09. pp. 221-234 (2009)
13. Krause, A., Smailagic, A., Siewiorek, D.: Context-aware Mobile Computing: Learning Context- dependent Personal Preferences from a Wearable Sensor Array. IEEE Transactions on Mobile Computing 5(2), 113-127 (2006)
14. Kwapisz, J.R., Weiss, G.M., Moore, S.A.: Activity Recognition using Cell Phone Accelerometers. SIGKDD Explorer Newsletter 12(2), 74-82 (2010)
15. Lovett, T., O'Neill, E., Irwin, J., Pollington, D.: The Calendar as a Sensor: Analysis and Improvement using Data Fusion with Social Networks and Location. In: Proc. Ubicomp '10. pp. 3-12 (2010)
16. Rachuri, K.K., Mascolo, C., Musolesi, M.: Energy-Accuracy Trade-offs in Querying Sensor Data for Continuous Sensing Mobile Systems. In: Workshop on Mobile Context-Awareness, Ubicomp '10 (2010)
17. Reddy, S., Mun, M., Burke, J., Estrin, D., Hansen, M., Srivastava, M.: Using Mobile Phones to Determine Transportation Modes. ACM Transactions on Sensor Networks 6(2), 1-27 (2010)
18. Riboni, D., Bettini, C.: COSAR: Hybrid Reasoning for Context-aware Activity Recognition. Personal and Ubiquitous Computing 15(3), 271-289 (2011)
19. Rosenthal, S., Dey, A., Veloso, M.: Using Decision-Theoretic Experience Sampling to Build Personalized Mobile Phone Interruption Models. In: Proc. Pervasive '11. pp. 170-187 (2011)

20. Santos, A.C., Cardoso, J.a.M., Ferreira, D.R., Diniz, P.C., Chaínho, P.: Providing User Context for Mobile and Social Networking Applications. Pervasive and Mobile Computing 6(3), 324-341 (2010)

21. Stikic, M., Schiele, B.: Activity Recognition from Sparsely Labeled Data Using Multi-instance Learning. In: Proc. LoCA '09. pp. 156-173 (2009)

**Claims**

1. A mobile device comprising:

   one or more sensors;
   a plurality of additional sensors; and
   logic configured to:

      obtain one or more first data outputs from the one or more sensors when the mobile device is in a first state;
      obtain one or more second data outputs from the one or more sensors;
      determine whether there has been a transition from the first state to a second state, based on a difference between the one or more first data outputs and the one or more second data outputs;
      obtain one or more third data outputs from the plurality of additional sensors if there has been a transition from the first state to the second state; and
      compare the one or more third data outputs with stored data outputs obtained using the plurality of additional sensors in a third state of the mobile device, the third state being a state prior to the first state, thereby determining whether the mobile device is in the third state.

2. The mobile device of claim 1, wherein the one or more sensors and/or the one or more additional sensors are configured to measure characteristics of the second state.

3. The mobile device of claim 1 or 2, wherein the plurality of additional sensors are selected according to the one or more first data outputs.

4. The mobile device of any of claims 1 - 3, wherein the plurality of additional sensors are selected according to the difference between the one or more first data outputs and the one or more second data outputs.

5. The mobile device of any of claims 1 - 4, wherein the plurality of additional sensors outnumber the one or more sensors.

6. The mobile device of any preceding claim, wherein the logic is further configured to periodically obtain one or more data outputs from the one or more sensors until the logic determines there has been a transition from the first state to a second state.

7. The mobile device of any preceding claim, wherein the logic is further configured to measure characteristics of the second state using stored data outputs obtained from a plurality of sensors of the mobile device in a state prior to the first state.

8. The mobile device of any preceding claim, wherein the logic is further configured to determine there has not been a transition from the first state to a second state if the difference between the one or more first data outputs and the one or more second data outputs does not exceed a predetermined threshold.

9. The mobile device of any preceding claim, wherein the logic is further configured to determine whether there has been a transition from the first state to a second state based on a comparison of the one or more first data outputs with the one or more second data outputs.

10. The mobile device of any preceding claim, wherein the mobile device is operable to receive data input so as to confirm whether there has been a transition from the first state to the second state.

11. The mobile device of any preceding claim, wherein a sensor of the mobile device is selected from one of the following: an accelerometer, a digital compass, a GPS receiver, a microphone, an ambient light sensor, a thermometer, a radio receiver, a Bluetooth receiver, and a Wi-Fi receiver.

**12.** A method of determining a state transition of a mobile device having one or more sensors, and a plurality of additional sensors, the method comprising:

obtaining one or more first data outputs from the one or more sensors when the mobile device is in a first state;
obtaining one or more second data outputs from the one or more sensors;
determining whether there has been a state transition from the first state to a second state, based on a difference between the one or more first data outputs and the one or more second data outputs;
obtaining one or more third data outputs from the plurality of additional sensors if there has been a transition from the first state to the second state; and
comparing the one or more third data outputs with stored data outputs obtained using the plurality of additional sensors in a third state of the mobile device, the third state being a state prior to the first state, thereby determining whether the mobile device is in the third state.

**13.** The method of claim 12, wherein the one or more sensors and/or the one or more additional sensors are configured to measure characteristics of the second state.

**14.** A computer-readable medium for storage on a mobile device, wherein the computer-readable medium comprises executable code configured such that, when executed on a computer, the code will perform the method of claim 12 or 13.

10

16

12a

12d

12b

14

12e

12c

12f

Figure 1

_Figure 2_

'Codebook' vectors, i.e.,
state data fingerprints

ID #1234
Label: <none>

Meeting

Figure 3

Figure 4

Europäisches
Patentamt

European
Patent Office

Office européen
des brevets

**EUROPEAN SEARCH REPORT**

Application Number

EP 12 27 5218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/177809 A1 (PAKZAD PAYAM [US] ET AL) 21 July 2011 (2011-07-21) * paragraph [0027] * * paragraph [0046] - paragraph [0051] * * claims 1-5 * | 1-14 | INV. H04M1/725 |
| X | BIANCHI F ET AL: "Barometric Pressure and Triaxial Accelerometry-Based Falls Event Detection", IEEE TRANSACTIONS ON NEURAL SYSTEMS AND REHABILITATIONENGINEERING, IEEE SERVICE CENTER, NEW YORK, NY, US, vol. 18, no. 6, 1 December 2010 (2010-12-01), pages 619-627, XP011373977, ISSN: 1534-4320, DOI: 10.1109/TNSRE.2010.2070807 * the whole document * | 1-14 | |
| X | WO 2010/111399 A1 (QUALCOMM INC [US]; SHEYNBLAT LEONID [US]; SEIBERT CRISTINA A [US]) 30 September 2010 (2010-09-30) * paragraph [0040] - paragraph [0053] * | 1-14 | TECHNICAL FIELDS SEARCHED (IPC) H04M |
| X | US 2008/234935 A1 (WOLF THOMAS G [US] ET AL) 25 September 2008 (2008-09-25) * paragraph [0035] - paragraph [0072] * | 1-14 | |

The present search report has been drawn up for all claims

| Place of search | Date of completion of the search | Examiner |
|---|---|---|
| Munich | 27 June 2013 | Maciejewski, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 27 5218

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2013

| Patent document cited in search report | | Publication date | Patent family member(s) | | Publication date |
|---|---|---|---|---|---|
| US 2011177809 | A1 | 21-07-2011 | TW | 201202734 A | 16-01-2012 |
| | | | US | 2011177809 A1 | 21-07-2011 |
| | | | WO | 2011088411 A2 | 21-07-2011 |
| WO 2010111399 | A1 | 30-09-2010 | TW | 201112654 A | 01-04-2011 |
| | | | US | 2010248662 A1 | 30-09-2010 |
| | | | WO | 2010111399 A1 | 30-09-2010 |
| US 2008234935 | A1 | 25-09-2008 | CA | 2679376 A1 | 02-10-2008 |
| | | | CN | 101636637 A | 27-01-2010 |
| | | | CN | 102564470 A | 11-07-2012 |
| | | | EP | 2129999 A2 | 09-12-2009 |
| | | | EP | 2503301 A2 | 26-09-2012 |
| | | | JP | 2010522344 A | 01-07-2010 |
| | | | JP | 2012150115 A | 09-08-2012 |
| | | | JP | 2012150116 A | 09-08-2012 |
| | | | KR | 20090123973 A | 02-12-2009 |
| | | | KR | 20110134527 A | 14-12-2011 |
| | | | KR | 20110135433 A | 16-12-2011 |
| | | | US | 2008234935 A1 | 25-09-2008 |
| | | | WO | 2008118874 A2 | 02-10-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BAO, L. ; INTILLE, S.** Activity Recognition from User-annotated Acceleration Data. *Proc. Pervasive '04,* 2004, 1-17
- **CONSOLVO, S. ; WALKER, M.** Using the Experience Sampling Method to Evaluate Ubicomp Applications. *IEEE Pervasive Computing,* 2003, vol. 2 (2), 24-31
- **CONSOLVO, S. ; MCDONALD, D.W. ; TOSCOS, T. ; CHEN, M.Y. ; FROEHLICH, J. ; HARRISON, B. ; KLASNJA, P. ; LAMARCA, A. ; LEGRAND, L. ; LIBBY, R.** Activity Sensing in the Wild: A Field Trial of UbiFit Garden. *Proc. CHI '08,* 2008, 1797-1806
- **FIGO, D. ; DINIZ, P.C. ; FERREIRA, D.R. ; CARDOSO, J.M.P.** Preprocessing Techniques for Context Recognition from Accelerometer Data. *Personal and Ubiquitous Computing,* 2010, vol. 14 (7), 645-662
- **FOGARTY, J. ; LAI, J. ; CHRISTENSEN, H. ; CHRISTENSEN, J.** Presence versus Availability: the Design and Evaluation of a Context-aware Communication Client. *International Journal of Human-Computer Studies,* 2004, vol. 61 (3), 299-317
- **FROEHLICH, J. ; CHEN, M.Y. ; CONSOLVO, S. ; HARRISON, B. ; LANDAY, J.A.** MyExperience: A System for In situ Tracing and Capturing of User Feedback on Mobile Phones. *Proc. MobiSys '09,* 2007, 57-70
- **FROEHLICH, J. ; DILLAHUNT, T. ; KLASNJA, P. ; MANKOFF, J. ; CONSOLVO, S. ; HARRISON, B. ; LANDAY, J.** UbiGreen: Investigating a Mobile Tool for Tracking and Supporting Green Transportation Habits. *Proc. CHI '09,* 2009, 1043-1052
- **HICKS, J. ; RAMANATHAN, N. ; KIM, D. ; MONIBI, M. ; SELSKY, J. ; HANSEN, M. ; ESTRIN, D.** AndWellness: An Open Mobile System for Activity and Experience Sampling. *Proc. WH '10,* 2010, 34-43
- **HO, J. ; INTILLE, S.S.** Using Context-aware Computing to Reduce the Perceived Burden of Interruptions from Mobile Devices. *Proc. CHI '05,* 2005, 909-918
- **ISAACMAN, S. ; BECKER, R. ; CÁCERES, R. ; KOBOUROV, S. ; MARTONOSI, M. ; ROWLAND, J. ; VARSHAVSKY, A.** Identifying Important Places in People's Lives from Cellular Network Data. *Proc. Pervasive '11,* 2011, 133-151

- **KAPOOR, A. ; HORVITZ, E.** Experience Sampling for Building Predictive User Models: a Comparative Study. *Proc. CHI '08,* 2008, 657-666
- **KJÆRGAARD, M.B. ; LANGDAL, J. ; GODSK, T. ; TOFTKJÆR, T.** EnTracked : Energy-Efficient Robust Position Tracking for Mobile Devices. *Proc. MobiSys '09,* 2009, 221-234
- **KRAUSE, A. ; SMAILAGIC, A. ; SIEWIOREK, D.** Context-aware Mobile Computing: Learning Context-dependent Personal Preferences from a Wearable Sensor Array. *IEEE Transactions on Mobile Computing,* 2006, vol. 5 (2), 113-127
- **KWAPISZ, J.R. ; WEISS, G.M. ; MOORE, S.A.** Activity Recognition using Cell Phone Accelerometers. *SIGKDD Explorer Newsletter,* 2010, vol. 12 (2), 74-82
- **LOVETT, T. ; O'NEILL, E. ; IRWIN, J. ; POLLINGTON, D.** The Calendar as a Sensor: Analysis and Improvement using Data Fusion with Social Networks and Location. *Proc. Ubicomp '10,* 2010, 3-12
- **RACHURI, K.K. ; MASCOLO, C. ; MUSOLESI, M.** Energy-Accuracy Trade-offs in Querying Sensor Data for Continuous Sensing Mobile Systems. *Workshop on Mobile Context-Awareness, Ubicomp '10,* 2010
- **REDDY, S. ; MUN, M. ; BURKE, J. ; ESTRIN, D. ; HANSEN, M. ; SRIVASTAVA, M.** Using Mobile Phones to Determine Transportation Modes. *ACM Transactions on Sensor Networks,* 2010, vol. 6 (2), 1-27
- **RIBONI, D. ; BETTINI, C.** COSAR: Hybrid Reasoning for Context-aware Activity Recognition. *Personal and Ubiquitous Computing,* 2011, vol. 15 (3), 271-289
- **ROSENTHAL, S. ; DEY, A. ; VELOSO, M.** Using Decision-Theoretic Experience Sampling to Build Personalized Mobile Phone Interruption Models. *Proc. Pervasive '11,* 2011, 170-187
- **SANTOS, A.C. ; CARDOSO, J.A.M. ; FERREIRA, D.R. ; DINIZ, P.C. ; CHAÍNHO, P.** Providing User Context for Mobile and Social Networking Applications. *Pervasive and Mobile Computing,* 2010, vol. 6 (3), 324-341
- **STIKIC, M. ; SCHIELE, B.** Activity Recognition from Sparsely Labeled Data Using Multi-instance Learning. *Proc. LoCA '09,* 2009, 156-173